# EUROPEAN PATENT SPECIFICATION

(11) **EP 1 842 739 B1**
(45) Date of publication and mention of the grant of the patent: **22.07.2009**
(21) Application number: 07103763.4
(22) Date of filing: 08.03.2007
(51) Int. Cl.: B60R 21/20, B60N 2/42

(54) **Motor vehicle seat, motor vehicle, and airbag module**
Kraftfahrzeugsitz, Kraftfahrzeug und Airbagmodul
Siège de véhicule à moteur, véhicule à moteur, et module d'airbag

(30) Priority: 05.04.2006 JP 2006104695; 05.04.2006 JP 2006104697; 05.04.2006 JP 2006104698; 05.04.2006 JP 2006104699
(43) Date of publication of application: 10.10.2007
(73) Proprietor: TAKATA CORPORATION, Minato-ku, Tokyo 106-8510 (JP)
(72) Inventor: Yoshikawa, Hiromichi, Tokyo 106-8510 (JP); Hiruta, Teruhiko, Tokyo 106-8510 (JP)
(74) Representative: Vossius & Partner

(56) References cited:
- EP-A- 1 568 537
- EP-A- 1 623 887
- JP-A- 10 217 818
- JP-A- 2001 239 872

## Description

The present invention relates to a motor vehicle seat, and more in detail, to a construction technology for a motor vehicle seat, on which an airbag module having a construction in which an airbag is developed and expanded from a downside to an upside of a seat cushion against movement of a motor vehicle occupant toward a front side of the motor vehicle in a seating condition of the motor vehicle occupant in a motor vehicle seat when in occurrence of an accident is mounted.

Hitherto, in a seatbelt-wearing condition in which a seatbelt is worn by a motor vehicle occupant seated in a motor vehicle seat, various technologies for blocking occurrence of a phenomenon, i.e., a so-called submarine phenomenon, in which the motor vehicle occupant has a behavior to slip through a downside of a seatbelt along a seat surface, along with a frontward movement of a waist portion of the motor vehicle occupant when in occurrence of an accident, is proposed. For example, in JP-A-5-229378 (patent document 1), a motor vehicle seat having a construction in which an expanded airbag compresses a seat cushion from below so as to block the movement of the motor vehicle occupant toward a front side of the motor vehicle at the time of occurrence of the accident is disclosed. However, in designing such a kind of motor vehicle seat, there is a demand for a technology to aim at improving workability when in the assembling operation.

Another example of a motor vehicle seat is disclosed in EP 1 623 887 A2.

Accordingly, in the present invention, it is a problem to provide a technology effective for aiming at improving workability when in the assembling operation in a motor

EP 1 623 887 A2 discloses in particular:

A motor vehicle seat mounted on a motor vehicle, comprising:
a left side frame 1 a in a seat frame 1,4 forming a bone structure of a seat extending in a front and back direction at a left side below a seat cushion 9;
a right side frame 1 b in the seat frame extending in a front and back direction at a right side below the seat cushion 9;
a bracket for connecting the left side frame 1 a and the right side frame 1 b below the seat cushion 9,
a seat pan 8 disposed between the left side frame 1 a and the right side frame 1 b below the seat cushion 9 above at the backside of the bracket in such a manner as to be adjacent thereto, the seat pan 8 including an airbag module housing portion 20 in which a housing opening 20 is formed at a side opposite to the bracket;
an airbag module 10 including an airbag 12 and a gas generator 14, and being housed in the airbag module housing portion 20, and being set to be such that the airbag 12 is developed and expanded from a downside to an upside of a seat cushion 9 by supplying gas for expanding the airbag 12 generated by activation of the gas generator 14, against forward movement of a motor vehicle occupant in a condition of being seated in a motor vehicle seat toward a front side of a motor vehicle when in occurrence of an accident, see. par 57; and
an airbag cover 18 mounted on the seat pan 8 so as to intercept the housing opening 20 formed at a side opposite to the bracket, and covering a housing opening side of the airbag 12 housed in the airbag module housing portion 20 in the mounted condition.
vehicle seat with an airbag module having a construction in which an airbag is developed and expanded from a downside to an upside of a seat cushion against movement of a motor vehicle occupant toward a front side of the motor vehicle in a seating condition of the motor vehicle occupant in a motor vehicle seat when in occurrence of the accident.

### [Means for Solving the Problems]

In order to solve the aforementioned problems, the present invention is constructed. Incidentally, the present invention can be applied to a construction technology for a motor vehicle seat mounted on various kinds of motor vehicles, such as automobile motor vehicles, trucks, buses, electric trains, boats and ships, and so fourth.

The first aspect of the present invention for solving the aforementioned problems is a motor vehicle seat according to Claim 1. The motor vehicle seat according to Claim 1 is a motor vehicle seat mounted on a motor vehicle, and constructed to be provided with at least a left side frame, a right side frame, a bracket, a seat pan, an airbag module, an airbag cover, and a positioning mechanism.

The left side frame according to the present invention is configured to be a seat frame constituting member extending in a front and back direction at a left side below a seat cushion in a seat frame forming a bone structure of a seat. The right side frame according to the present invention is configured to be a seat frame constituting member extending in a front and back direction at a right side below the seat cushion in the seat frame forming the bone structure of the seat. The bracket according to the present invention is configured to be a seat frame constituting member for connecting the left side frame and the right side frame below the seat cushion in the seat frame forming the bone structure of the seat. The bracket, the left side frame, and the right side frame are typically connected by welding or fastening with a bolt and nut. A main body portion of the motor vehicle seat is constructed by the seat frame.

A seat pan according to the present invention is configured to have a construction being disposed between the left side frame and the right side frame below the seat cushion above or at the backside of the bracket in such a manner as to be adjacent thereto, and being provided with an airbag module housing portion at a side opposite to the bracket of which a housing opening is formed. The "seat pan" according to the present invention refers to a member constituting a seat bottom surface of the motor vehicle seat, and specifically, can also be defined as a seat cushion panel, a seat cushion frame, or a seat cushion board each receiving the seat cushion. With regard to a disposing configuration of the seat pan, it is sufficient that entire, or a part of the seat pan is disposed between the left side frame and the right side frame. A construction in which the seat pan is fixed to the left side frame and the right side frame in a manner so as to be hung across by welding, fastening with a bolt and nut, or the like, or a construction in which the seat pan is fixed to a member positioned between the left side frame and the right side frame by welding, fastening with a bolt and nut, or the like, can be adopted. Further, in the present invention, it is sufficient that the seat pan at least includes a portion which is disposed above or at the backside of the bracket in such a manner as to be adjacent thereto. The airbag module housing portion, at the side opposite to the bracket of which the housing opening is formed, is constructed as a portion for housing the airbag module, and specifically, in the airbag module housing portion of the seat pan which is disposed above or at the backside of the bracket in such a manner as to be adjacent thereto, the housing opening is formed toward an upside or a backside of the seat pan.

The airbag module according to the present invention is constructed to include an airbag and a gas generator, and to be housed in the airbag module housing portion, and to be set to resist movement of a motor vehicle occupant toward a front side of a motor vehicle, in a seated condition in a motor vehicle seat when in occurrence of the accident, while causing the airbag to be developed and expanded from a downside to an upside of a seat cushion by supplying the gas for expanding the airbag, which is generated by activation of the gas generator. The airbag module can also be called as "an airbag apparatus" or "an occupant restraining apparatus".

The airbag cover according to the present invention is mounted on the seat pan so as to intercept the housing opening formed at a side opposite to the bracket in the seat pan, and is constructed to serve as a cover member for covering the housing opening side of the airbag housed in the airbag module housing portion in the housed condition. The airbag cover can also be configured to be a component of the airbag module.

As in the motor vehicle seat according to the present invention, in a structure in which an airbag module (airbag) is disposed below the seat cushion, it is supposed that a load from the occupant seated in the seat is affected to an airbag side via a seat cushion, in a housed condition of the airbag. An influence, in which the load from the occupant seated in the seat is affected to the airbag via the seat cushion, is configured to be suppressed by covering the housing opening side of the airbag housed in the airbag module housing portion by means of the airbag cover. Consequently, it becomes possible to suppress the load in which the airbag in the housed condition receives from outside. Thereby, it becomes possible for movement of the airbag to be aimed at being normalized when in occurrence of an accident.

The positioning mechanism according to the present invention is provided with a function for positioning the airbag cover and the seat pan to each other in the mounted condition of the airbag cover. Thereby, the seat pan and the airbag cover are to be latched to each other. With regard to the concrete construction of the positioning mechanism, a construction, in which a convex portion is provided in one of the airbag cover and the seat pan, and a concave portion to be engaged with the convex portion of the other of the airbag cover and the seat pan is provided, can be adopted.
In accordance with the construction described above in the invention according to Claim 1, a provisional placing operation of the airbag cover for an assembling operation becomes easy and it becomes possible to aim at improving workability when in the assembling operation.

The second aspect of the present invention for solving the above-described problems is a motor vehicle seat according to Claim 2. In the motor vehicle seat according to Claim 2, the positioning mechanism according to Claim 1 is constructed with a concave portion provided in the seat pan and a convex portion capable of being engaged with the concave portion, which is provided in the airbag cover. According to the present construction, by engaging the convex portion in the airbag cover with the concave portion in the seat pan, the seat pan and the airbag cover are to be latched to each other. With regard to the concave portion in this case, a penetration hole, a non-penetration hole, a groove, or the like can be appropriately used. Further, with regard to the convex portion of this case, a rod-shaped pin, a claw-shaped member, or the like can appropriately be used. In accordance with the construction described above in the invention according to Claim 2, with regard to an assembling operation when in mounting the airbag cover on the seat pan, it becomes easy to perform the provisional placing operation for the airbag cover for the assembling operation by engaging the convex portion of the airbag cover with the concave portion of the seat pan.

The third aspect of the present invention for solving the above-described problems is the motor vehicle seat according to Claim 3. The motor vehicle seat according to Claim 3 is provided with a fixing member in addition to the construction according to either one of claims 1 or 2. The fixing member has a function for fastening and fixing the airbag cover and the seat pan being positioned to each other by means of the positioning mechanism in the mounted condition of the airbag cover. With regard to the concrete construction of the fixing member, a rivet, a bolt and nut, and the like can be appropriately used.
In accordance with the construction described above in the invention according to Claim 3, it becomes possible to assuredly fix the seat pan and the airbag cover in the positioned condition using the fixing member.

The fourth aspect of the present invention for solving the above-described problems is a motor vehicle according to Claim 4. The motor vehicle seat according to Claim 4 is provided with at least one of the motor vehicle seat and the seat belt for restraining a motor vehicle occupant seated in the motor vehicle seat, according to any one of Claims I through 3. Further, it is constructed that occurrence of a phenomenon, i.e., a so-called submarine phenomenon, in which the motor vehicle occupant has a behavior to slip through a downside of a seatbelt along a seat surface, along with a frontward movement of a waist portion of the motor vehicle occupant when in occurrence of the accident, is blocked in a seat belt wearing condition in which the seat belt is worn by the motor vehicle occupant seated in the motor vehicle seat, by means of the airbag module mounted on the motor vehicle seat.
Accordingly, in accordance with the invention according to Claim 4, a provisional placing operation of the airbag cover for an assembling operation becomes easy and the motor vehicle is provided with a motor vehicle seat capable of improving workability when in the assembling operation.

The fifth aspect of the present invention for solving the above-described problems is the airbag module according to Claim 5. The airbag module according to Claim 5 has a construction substantially similar to the airbag module serving as a component of the motor vehicle seat according to Claim 1.
Accordingly, in accordance with the invention according to Claim 5, an airbag module a provisional placing operation of the airbag cover for an assembling operation becomes easy and the airbag module is provided with a motor vehicle seat capable of improving workability when in the assembling operation.

As described above, according to the present invention, in a motor vehicle seat with an airbag module having a construction in which the airbag is developed and expanded from a downside to an upside of a seat cushion against forward movement of a motor vehicle occupant in a condition of being seated in the motor vehicle seat, toward a front side of a motor vehicle when in occurrence of an accident, specifically, an airbag cover is provided for intercepting the housing opening of the airbag module housing portion for housing the airbag module and for covering a housing opening side of the airbag. In addition, a positioning mechanism is adopted for positioning the airbag cover and the seat pan to each other in the mounted condition of the airbag cover. Thereby, it becomes possible to aim at improving workability for an assembling operation.

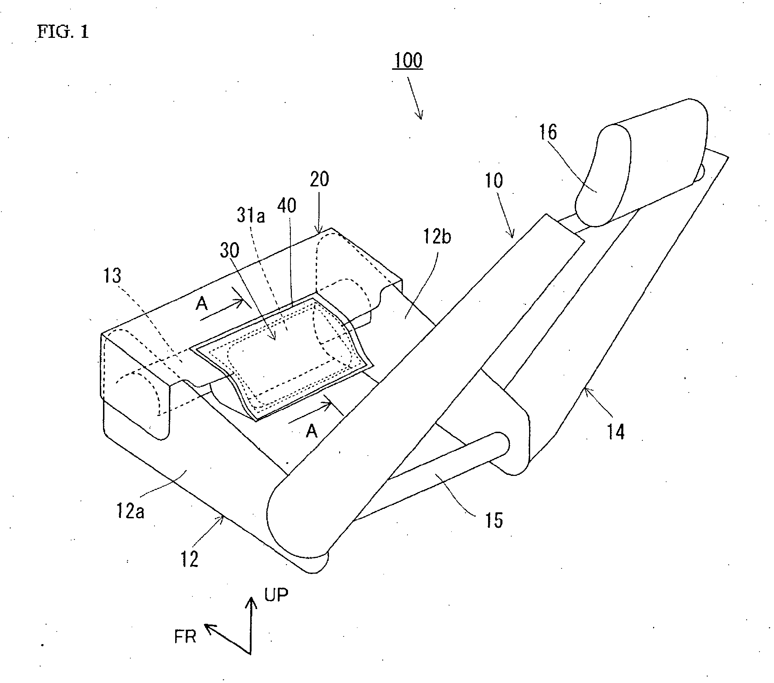

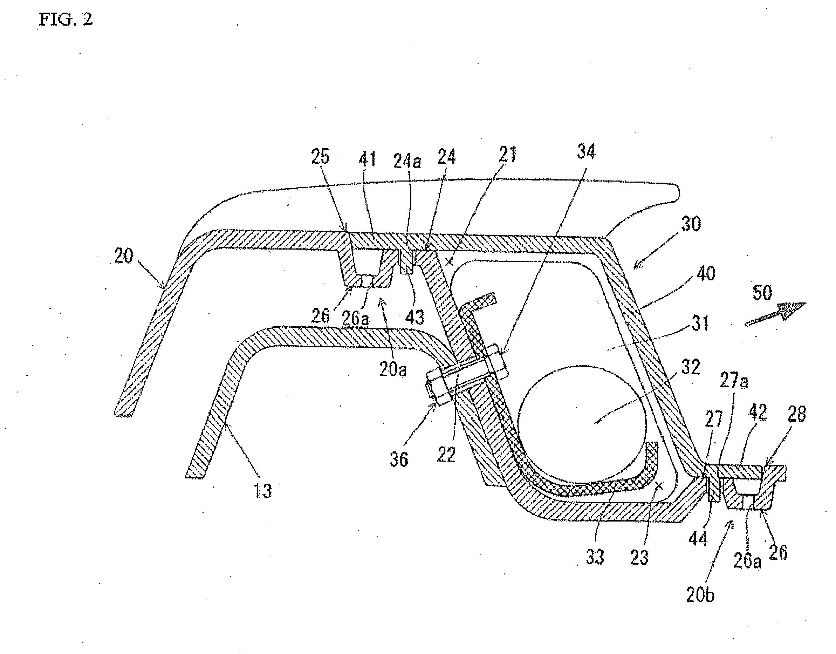

Hereinbelow, an embodiment of the present invention will be explained in detail referring to the drawings.
Fig. 1 is a perspective view looking from diagonally back of a motor vehicle showing an internal structure of the motor vehicle seat 100 according to the present embodiment;
Fig. 2 is a cross-section along a line A-A in Fig. 1;
Fig. 3 is a perspective view schematically showing a work for housing an airbag module 30 according to the present embodiment into a housing portion 21 of a seat pan 20; and
Fig. 4 is perspective view schematically showing a work for attaching an airbag cover 40 according to the present embodiment into the seat pan 20.
Firstly, a construction of a motor vehicle seat 100 as an embodiment of a "motor vehicle seat" according to the present invention will be explained with reference to Fig. 1 through Fig. 3. Currently, Fig. 1 is a view showing an internal structure of the motor vehicle seat 100 according to the present embodiment, and is a perspective view looking from diagonal backside of the motor vehicle. Further, Fig. 2 is a cross-section along a line A-A in Fig. 1.

As shown in Fig. 1, the motor vehicle seat 100 according to the present embodiment is a motor vehicle seat to be mounted on a motor vehicle, and is mainly constructed with a seat frame 10, a seat pan 20, and an airbag module 30. The motor vehicle seat 100 is constructed to serve as a driver's seat where a driver is seated, or a passenger seat. Further, in the motor vehicle on which the motor vehicle seat 100 is mounted, a seatbelt (corresponding to a "seatbelt" according to the present invention) to be worn by an occupant seated in the motor vehicle seat 100 is further mounted. Incidentally, a direction indicated by "FR" in Fig. 1 represents a front side of the motor vehicle, and a direction indicated by "UP" represents an upside of the motor vehicle.

The seat frame 10 is constructed to serve as a frame that forms a bone structure portion of the motor vehicle seat 100, and is provided with at least a base frame 12 and a back frame 14. The seat frame 10 corresponds to a "seat frame" according to the present invention. A seat cushion (not shown) formed from a material having plasticity, such as a urethane material, or the like, is mounted on the base frame 12, and the seat cushion constitutes a seat surface of the motor vehicle seat 100. Further, a seat back (not shown) formed from a material having plasticity, such as a urethane material, or the like, is mounted on the back frame 14, and the seat back constitutes a back surface of the motor vehicle seat 100. Furthermore, an outer surface of each of the seat cushion and the back seat is covered with scurf skin (not shown) formed from leather, cloth, or the like.

The base frame 12 is a frame to be disposed below the seat cushion, and is provided with a left-and-right pair of side frames 12a, 12b (a left side frame 12a, and a right side frame 12b), extending in a front and back direction of the motor vehicle seat 100 (conforming to a front and back direction of the motor vehicle). The currently described left side frame 12a and the right side frame 12b correspond to a "left side frame" and a "right side frame" according to the present invention, respectively.
Further, a bracket 13 for reinforcing is provided so as to be hung across the left and right side frames 12a, 12b at an upper portion side of the base frame 12. The bracket 13 is constructed to be a plate shape (a curved plate shape in Fig. 1) having a predetermined board thickness, and is connected to the left and right side frames 12a, 12b, by means of a welding process, a fastening process with a bolt and a nut, or the like. This bracket 13 serves as a supporting member for supporting the seat pan 20, and is constructed to serve as a holding member for connecting and holding the left and right side frames 12a, 12b. In addition, the bracket 13 also serves as a positioning member when connecting the left and right side frames 12a, 12b, resulting in providing a good assembling capability. This bracket 13 corresponds to a "bracket" according to the present invention.

The back frame 14 is a frame that is rotatably connected to the base frame 12 via a supporting shaft 15 and a reclining device (not shown). A head rest 16 is attached to a position corresponding to a head portion of a motor vehicle occupant at an upper part of the back frame 14.

The seat pan 20 is provided so as to be hung across the left-and-right pair of the side frames 12a, 12b in a manner so as to cover the left-and-right pair of the side frames 12a, 12b, from an upside thereof above the bracket 13 and at the backside of the bracket 13 in such a manner as to be adjacent thereto. The seat pan 20 is a member constituting a seat bottom surface of the motor vehicle seat 100, and specifically, is also able to be defined as a seat cushion panel that receives the seat cushion, a seat cushion frame, or a seat cushion board. Although described later in detail, the seat pan 20 is attached to the bracket 13 by means of the fastening process with the bolt and nut at two places. The seat pan 20 can also be joined to the left and right side frames 12a, 12b, by means of the welding process, the fastening process with the bolt and nut or the like. The seat pan 20 has a function to receive a load from the seat cushion. The seat pan 20 corresponds to a "seat pan" according to the present invention. In the present invention, the seat pan 20 is sufficient to have at least a portion to be disposed above the bracket 13 or at the backside thereof in a proximal manner.

As shown in Fig. 2, in the seat pan 20, a housing portion 21 for housing the airbag module 30 is provided. The housing portion 21 is provided with a housing opening at a side opposite to the bracket 13, and the housing opening is configured to be directed diagonally upward in a backward direction. The housing opening of the housing portion 21 corresponds to a "housing opening" according to the present invention.
Accordingly, a developing direction (sometimes also called as a protruding direction) of an airbag (an airbag 31, described later) of the airbag module 30 is configured to be directed diagonally upward in a backward direction as indicated by a direction of an arrow 50 in Fig. 2. By means of a holding function (or a positioning function) of the airbag module 30 by the concave portion 23 that is caved downward, a work for housing the airbag module 30 in the housing portion 21, and a work for attaching and fixing the airbag module 30 to the seat pan 20 side is aimed at being facilitated. The housing portion 21 corresponds to an "airbag module housing portion" according to the present invention.

Further, in the present embodiment, an airbag cover 40 is mounted on the seat pan 20 so as to intercept the housing opening formed at the side opposite to the bracket 13 in each of portions of the seat pan 20. The airbag cover 40 is constructed as a cover member for covering a housing opening side (a backside of a diagonal upside) of the airbag (an airbag 31, described later) of the airbag module 30 housed in the housing portion 21 in the mounted condition. Furthermore, the airbag cover 40 allows pressure force of the airbag for pressing the seat cushion upward by means of a developing and expanding operation of the airbag to be applied to the seat cushion when in an operation of the airbag module 30, while the airbag cover 40 protects the airbag housed in the housing portion 21 when in nonoperating time of the airbag module 30. The airbag cover 40 corresponds to an "airbag cover" according to the present invention. Incidentally, the airbag cover 40 may be constituted as a component of the airbag module 30.

According to the construction as described above, by covering the housing opening side of the airbag housed in the housing portion 21 by the airbag cover 40, an influence caused by a load from the occupant seated in the seat to be affected to the airbag via the seat cushion is suppressed. As a result, a load in which the airbag in a housed condition receives from outside, can be suppressed. Consequently, it becomes possible for an operation of the airbag to be aimed at being normalized when in occurrence of an accident.

Moreover, with regard to a mounting operation for mounting the airbag cover 40, the seat pan 20 is constructed to have a flat portion 24 and a step portion 25 in a first area 20a corresponding to a front end portion 41 (a left side end portion in Fig. 2) of the airbag cover 40 in the mounted condition thereof. Similarly, the seat pan 20 is constructed to have a flat portion 27 and a step portion 28 in a second area 20b corresponding to a rear end portion 42 (right side end portion in Fig. 2) of the airbag cover 40 in the mounted condition thereof.

The flat portion 24 provided in the first area 20a of the seat pan 20 is a portion, on which the front end portion 41 of the airbag cover 40 in a condition of being hung across is mounted, and is formed as a continuous contacting surface (sometimes also called as a "contacting surface", a "surface to be hung across", an "overlapping surface", or a "lapping surface") that is overlapping with the front end portion 41. Similarly, the flat portion 27 provided in the second area 20b of the seat pan 20 is a portion, on which the rear end portion 42 of the airbag cover 40 in a condition of being hung across is mounted, and is formed as a continuous contacting surface (sometimes also called as a "contacting surface", a "surface to be hung across", an "overlapping surface", or a "lapping surface") that is overlapping with the front end portion 42.

According to the construction as described above, in the condition of the airbag cover 40 to be mounted (worn condition), by means of that each of the end portions 41, 42, of the airbag cover 40 is overlapping with the flat portions 24, 27, of the seat pan 20 in a surface contact, the airbag cover 40 is to be in close contact with the seat pan 20, and results in being able to improve a close-contact characteristic in the nonoperating time of the airbag module 30. This is effective of preventing dropping off of the airbag cover 40 due to external force. Incidentally, with regard to a length of the overlapped portion (overlapping width) of the flat portions 24, 27, with the airbag cover 40 side, in a case that the close contact characteristic or a dropping-off prevention characteristic with the airbag cover 40 is considered, it is preferable to be set to be equal to or greater than 3mm, for example. Further, so as to improve the close contact characteristic of the seat pan 20 and the airbag cover 40, it is preferable to provide these flat portions 24, 27, over an entire periphery of the housing opening of the housing portion 21.

Further, it is constructed that in the flat portion 24 provided in the first area 20a of the seat pan 20, a hole portion 24a penetrating in an upper and lower direction is provided, and a protruding piece 43 that protrudes downward from the front end portion 41 of the airbag cover 40 is inserted into the hole portion 24a. Similarly, it is constructed that in the flat portion 27 provided in the second area 20b of the seat pan 20, a hole portion 27a penetrating in an upper and lower direction is provided, and a protruding piece 44 that protrudes downward from the rear end portion 42 of the airbag cover 40 is inserted into the hole portion 27a. A positioning operation of the airbag cover 40 for the seat pan 20 is performed by means of that the protruding piece 43 is inserted into the hole portion 24a and that the protruding piece 44 is inserted into the hole portion 27a. The hole portions 24a, 27a and the protruding pieces 43, 44 have a function for positioning the airbag cover 40 and the seat pan 20 to each other in the mounted condition of the airbag cover 40, and serve as the positioning mechanism according to the present invention. The hole portions 24a, 27a of the seat pan 20 correspond to the "concave portions" of the present invention, and the protruding pieces 43, 44 of the airbag cover 40 correspond to the "convex portions" of the present invention.

Furthermore, although not shown, in the present embodiment, the seat pan 20 and the airbag cover 40 in the positioned condition are further fixed to each other by a fastening device, such as rivets, bolt and nut, or the like. Thereby, the seat pan 20 and the airbag cover 40 in the positioned condition are brought to be able to be assuredly fixed. The fastening device, such as rivets, bolt and nut, or the like is a fixing member for fastening and fixing the airbag cover 40 and the seat pan 20 being positioned to each other by means of the positioning mechanism in the mounted condition of the airbag cover 40. The fastening device corresponds to the "fixing member" according to the present invention.

According to the construction as described above, a provisional placing operation of the airbag cover 40 for an assembling operation becomes easy and it becomes possible to aim at improving workability when in the assembling operation by means of that the hole portion 24a and the hole portion 27a of the seat pan 20 serve as the positioning member for the airbag cover 40. In the present embodiment, although the hole portion 24a and the hole portion 27a are formed to have a penetrating shape, a hole of a non-penetrating shape or a groove can also be applicable in the present invention. Further, with regard to the protruding piece 43 and the protruding piece 44, a rod-shaped pin, a claw-shaped member, or the like can be appropriately used.

Further, in the present invention, in addition to a first construction in which the protruding piece 43 of the airbag cover 40 is inserted into the hole portion 24a of the seat pan 20, and the protruding piece 44 of the airbag cover 40 is inserted into the hole portion 27a of the seat pan 20, a case that a second construction in which the airbag cover 40 and the seat pan 20 are further fixed to each other by means of the fastening device, such as the rivets, the bolt and nut, or the like is used, is described. However, in the present invention, at least one of the first construction and the second construction can be adopted.

The step portion 25 provided in the first area 20a of the seat pan 20 is constructed as a step portion (stepped shape) where a height difference corresponding to a board thickness of the front end portion 41 of the airbag cover 40 with regard to the upper and lower direction (in Fig. 2) is provided. In concrete terms, it is constructed that a rear side is lower than a front side by an extent of the board thickness of the front end portion 41, in each of the portions in the first area 20a of the seat pan 20 by the step portion 25. Similarly, the step portion 28 provided in the second area 20b of the seat pan 20 is constructed as a step portion (stepped shape) where a height difference corresponding to a board thickness of the rear end portion 42 of the airbag cover 40 with regard to the upper and lower direction (in Fig. 2) is provided. In concrete terms, it is constructed that a front side is lower than a rear side by an extent of the board thickness of the rear end portion 42, in each of the portions in the second area 20b of the seat pan 20 by the step portion 28. By providing the step portion 25 and the step portion 28, the seat pan 20 and the airbag cover 40 are latched to each other via the step portion 25 and the step portion 28 in the mounted condition of the airbag cover 40. Further, movement of the front end portion 41 of the airbag cover 40 toward the front side is limited by the step portion 25, and movement of the rear end portion 42 of the airbag cover 40 toward the rear side is limited by the step portion 28. Furthermore, a surface of the seat pan 20 is brought to be in plane with a surface of the airbag cover 40, or to be formed into a smooth surface with a surface of the airbag cover 40.

According to the construction as described above, by providing the step portion 25 and the step portion 28 in the seat pan 20, the assembling operation in mounting the airbag 40 onto the seat pan 20 becomes easy. Further, after mounting the airbag cover 40 onto the seat pan 20, the smooth surface formed by means of the seat pan 20 and the airbag cover 40, which is positioned below the seat cushion, prevents forming of an uneven surface at a circumferential portion of the airbag cover 40. This enables realizing to form a structure not to block a sitting comfortableness for a motor vehicle occupant seated above the circumferential portion of the airbag cover 40 via the seat cushion.

Further, a groove portion 26 is provided over an entire periphery of an opening edge portion (edge portion area of the housing opening) of the housing portion 21 in the seat pan 20. The groove portion 26 is formed at a position outer than the flat portions 24, 27 and lower than the flat portions 24, 27 in the seat pan 20. Moreover, in the groove portion 26, a penetrating hole 26a downwardly formed in a penetrating manner from the groove portion 26 is provided. Incidentally, the groove portion 26 can be partially provided at the opening edge portion of the housing portion 21 as needed.

According to the construction as described above, in the mounted condition of the airbag cover 40, it becomes possible to prevent intruding of a liquid such as water or the like into the housing portion 21 by discharging the liquid such as water or the like intruded from a gap between the airbag cover 40 and the seat pan 20 along the groove portion 26, and further, by actively discharging the liquid flowing through the groove portion 26 toward a downside through the penetrating hole 26a. Specifically, by further providing the penetrating hole 26a upon providing the groove portion 26, an active water-discharging operation can be performed through the penetrating hole 26a, even though the housing portion 21 is in a condition close to a horizontal condition in relation to a floor surface, and it becomes possible to increase a water-discharging effect.

As shown in Fig. 2, the airbag module 30 in the present embodiment includes at least an airbag 31, a gas generator (sometimes called as "inflator") 32, a retainer 33, and a harness (illustration is omitted). The airbag module 30 corresponds to an "airbag module" according to the present invention.

The airbag 31 is folded back in a predetermined folding configuration and housed, and is constructed as an airbag element that is developed and expanded by means of that gas for expanding an airbag, generated by activation of the gas generator 32 when in occurrence of the accident is supplied thereto. In concrete terms, the airbag 31 is developed and expanded from a downside to an upside of a seat cushion against movement of a motor vehicle occupant toward a front side of the motor vehicle in a seated condition of the motor vehicle occupant in a motor vehicle seat when in occurrence of the accident. Thereby, in a seatbelt-wearing condition in which a seatbelt is worn by a motor vehicle occupant seated in a motor vehicle seat 100, a phenomenon, i.e., a so-called submarine phenomenon, in which the motor vehicle occupant has a behavior to slip through a downside of a seatbelt along a seat surface, along with a frontward movement of a waist portion of the motor vehicle occupant when in occurrence of the accident, is blocked or suppressed. The airbag 31 described here corresponds to an "airbag" according to the present invention, and a gas generator 32 corresponds to a "gas generator" according to the present invention.

The retainer 33 is constructed to serve as a member for housing the gas generator 32. The retainer 33 corresponds to a "retainer" according to the present invention. A fixing bolt 34 for attaching and fixing the airbag module 30 to the base frame 12 side is provided in the retainer 33. The airbag module 30 is attached and fixed to the base frame 12 side by means of the fixing bolt 34. In concrete terms, the fixing bolt 34 is configured to be able to be inserted into a penetrating hole 22 penetrating through the seat pan 20, the bracket 13, and the airbag 31, in a condition in which the airbag module 30 is housed in the housing portion 21 of the seat pan 20. Accordingly, three members of the retainer 33, the seat pan 20, and the bracket 13 are integrally formed by being fixed to each other by being fastened together (sometimes called as "fixing by together-fastening") by fastening (screwing) the fixing bolt 34 inserted through the penetrating hole 22, and the nut 36 with each other. In this case, the nut 36 may be constructed as a separate body from the bracket 13, or may have a construction in which the nut 36 is integrally jointed with the bracket 13. Further, a shape of a round hole, a long hole, a slit, or the like can appropriately be selected as the penetrating hole 22.

Incidentally, in the present embodiment, a construction is made such that an extending direction of a bolt axis of the fixing bolt 34 is approximately conformed to a developing direction of the airbag 31 along a direction indicated by an arrow 50 in Fig. 2. According to the construction as described above, it becomes possible that fastening force of the fixing bolt 34 is efficiently used as force against an airbag load when the airbag is developed and expanded.

Although not specifically illustrated, the harness is constructed as a harness for transmitting an activation signal (sometimes also called as a "control signal") to the gas generator 32 when in occurrence of the accident.

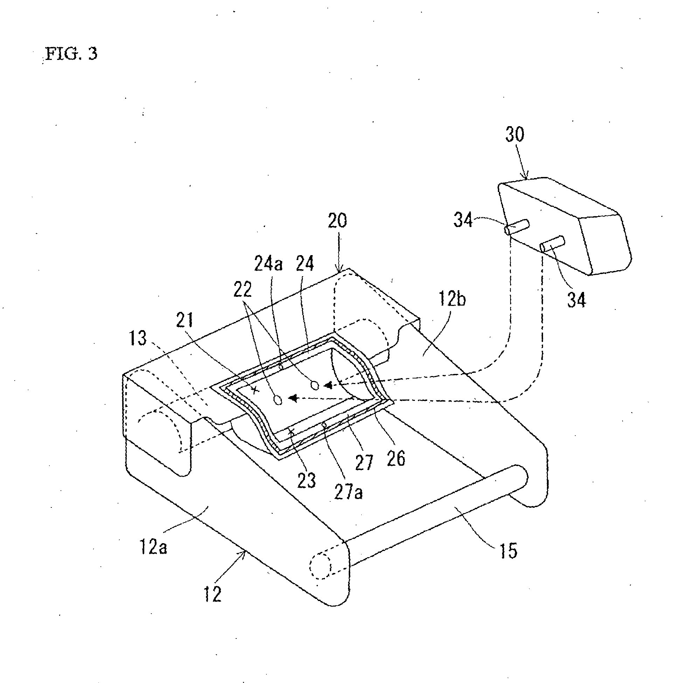

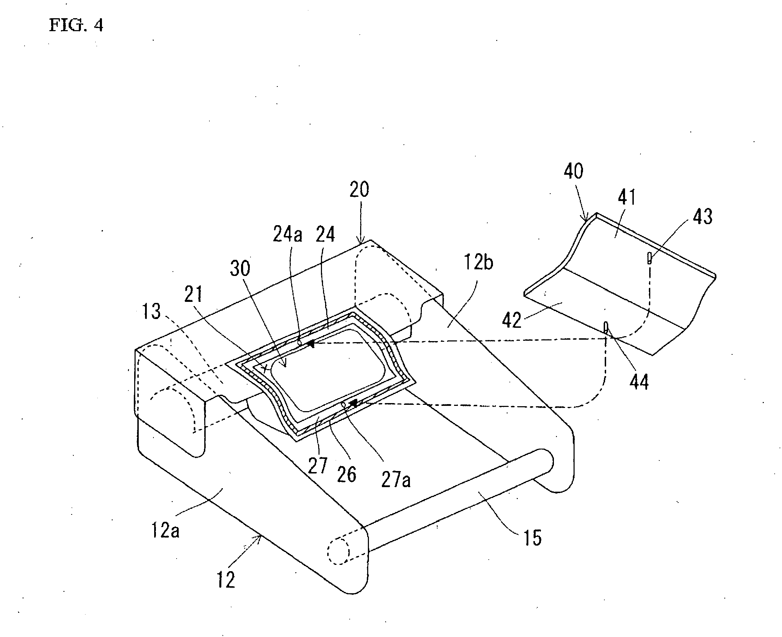

Currently, an assembling work for assembling the airbag module 30 according to the present embodiment, namely in concrete terms, a work for housing the airbag module 30 in the housing portion 21 of the seat pan 20, and a work for attaching the airbag cover 40 to the seat pan 20 will be explained referring to Fig. 3 and Fig. 4.

Fig. 3 is a perspective view schematically showing the work for housing the airbag module 30 according to the present embodiment, into the housing portion 21 of the seat pan 20. As shown in Fig. 3, in the housing work for housing the airbag module 30, firstly, the airbag module 30 is moved to the housing portion 21 in a manner so as for the fixing bolt 34 at an airbag module 30 side to be headed for the housing portion 21 of the seat pan 20. Then, in a condition of the airbag module 30 whose gas generator 32 side is headed for a down side, the airbag module 30 is housed in the concave portion 23 from above the seat pan 20. Thereafter, the fixing bolt 34 of the airbag module 30 is inserted into the penetrating hole 22, and the fixing bolt 34 and the nut 36 are fastened to each other. Thereby, a condition, in which the retainer 33, the seat pan 20, and the bracket 13 are fastened and fixed together so as to be integrally formed (a condition shown in Fig. 2), is formed. At this moment, by means of that the airbag module 30, the seat pan 20, and the bracket 13 are fastened and fixed together by the fixing bolt 34, pressure generated at the time when the airbag is developed and expanded when in occurrence of the accident, namely a load applied from the airbag module when in operation thereof is received by the seat pan 20 and the bracket 13 being integrally formed by the together-fastening and fixing operation.

Fig. 4 is a perspective view schematically showing the work for attaching the airbag cover 40 according to the present embodiment to the seat pan 20. As shown in Fig. 4, in the work for attaching the airbag cover 40, the airbag cover 40 is moved toward the seat pan 20 in a condition in which the airbag module 30 is housed. Further, the protruding piece 43 provided at a lower surface of the front end portion 41 of the airbag cover 40 is inserted into the hole portion 24a provided in the flat portion 24 of the seat pan 20, and the protruding piece 44 provided at a lower surface of the rear end portion 42 of the airbag cover 40 is inserted into the hole portion 27a provided in the flat portion 27 of the seat pan 20. Thereby, the airbag cover 40 is overlapped on the flat portions 24, 27 of the seat pan 20, and as a result, the airbag cover 40 becomes to be in close contact with the seat pan 20, and by means of a latching function, in which the protruding piece 43 is latched with the hole portion 24a and the protruding piece 44 is latched with the hole portion 27a, it becomes possible to perform the positioning operation of the airbag cover 40 to the seat pan 20. Thereafter, the seat pan 20 and the airbag cover 40, which are in the positioned condition, are further fixed to each other by the fastening device such as a rivet, a bolt and nut, or the like (illustration is omitted).

### (Another Embodiment)

Incidentally, the present invention is not limited to the aforementioned embodiment, and various applications and modifications are considerable. For example, the following each embodiment, to which the aforementioned embodiment is applied, can also be performed.

Furthermore, in the aforementioned embodiment, although a construction of the driver's seat where the driver is seated, or a construction of the motor vehicle seat 100 constructed as a passenger seat is explained, the characteristic part of the present invention can also be applied to a construction of various types of motor vehicle seats including the driver's seat or the passenger seat, such as for example, a rear seat. In the motor vehicle in this case, various kinds of motor vehicles moving with the motor vehicle occupant seated thereupon, such as automobiles, airplanes, boats and ships, electric trains, buses, trucks, and so fourth are included.

## Claims

1. A motor vehicle seat mounted on a motor vehicle, comprising:
a left side frame (12a) in a seat frame (10) forming a bone structure of a seat extending in a front and back direction at a left side below a seat cushion;
a right side frame (12b) in the seat frame extending in a front and back direction at a right side below the seat cushion;
a bracket (13) for connecting the left side frame and the right side frame below the seat cushion;
a seat pan (20) disposed between the left side frame and the right side frame below the seat cushion above or at the backside of the bracket in such a manner as to be adjacent thereto, the seat pan including an airbag module housing portion (21) in which a housing opening is formed at a side opposite to the bracket;
an airbag module (30) including an airbag (31) and a gas generator (32) and being housed in the airbag module housing portion, and being set to be such that the airbag is developed and expanded from a downside to an upside of a seat cushion by supplying gas for expanding the airbag generated by activation of the gas generator against forward movement of a motor vehicle occupant in a condition of being seated in a motor vehicle seat toward a front side of a motor vehicle when in occurrence of an accident;
an airbag cover (40) mounted on the seat pan so as to intercept the housing opening formed at a side opposite to the bracket, and covering a housing opening side of the airbag housed in the airbag module housing portion in the mounted condition; and
a positioning mechanism (24a, 27a, 43, 44) for positioning the airbag cover and the seat pan to each other in the mounted condition of the airbag cover.

2. The motor vehicle seat according to Claim 1, wherein the positioning mechanism comprises a concave portion (24a, 27a) provided in the seat pan, and a convex portion (43, 44) provided in the airbag cover and capable of being engaged with the concave portion.

3. The motor vehicle seat according to either one of Claims 1 or 2 further including a fixing member for fastening and fixing the airbag cover and the seat pan being positioned to each other by means of the positioning mechanism in the mounted condition of the airbag cover.

4. A motor vehicle, comprising:
the motor vehicle seat (100) according to any one of Claims 1 through 3; and
a seat belt for restraining a motor vehicle occupant seated in the motor vehicle seat,
wherein the airbag module mounted on the motor vehicle seat is constructed to block a movement of the motor vehicle occupant to slip through a downside of the seat belt along a seat surface along with a frontward movement of a waist portion of the motor vehicle occupant when in occurrence of the accidents, in a seat belt wearing condition
wherein the seat belt is worn by the motor vehicle occupant seated in the motor vehicle seat.

5. An airbag module for use in a motor vehicle seat, wherein the motor vehicle seat comprises:
a left side frame (12a) in a seat frame forming a bone structure of a seat extending in a front and back direction at a left side below a seat cushion;
a right side frame (12b) in the seat frame extending in a front and back direction at a right side below the seat cushion;
a bracket (13) for connecting the left side frame and the right side frame below the seat cushion; and
a seat pan (20) disposed between the left side frame and the right side frame below the seat cushion above or at the backside of the bracket in such a manner as to be adjacent thereto, and the seat pan including an airbag module housing portion (21) in which a housing opening is formed at a side opposite to the bracket,
wherein the airbag module includes an airbag (31) and a gas generator (32), and is housed in the airbag module housing portion, and wherein the airbag module is set to be such that the airbag is developed and expanded from a downside to an upside of a seat cushion by supplying gas for expanding the airbag generated by activation of the gas generator against forward movement of a motor vehicle occupant in a condition of being seated in the motor vehicle seat, toward a front side of a motor vehicle when in occurrence of an accident, and
wherein the airbag module further includes:
an airbag cover (40) mounted on the seat pan so as to intercept the housing opening formed at a side opposite to the bracket, and covering a housing opening side of the airbag in a condition housed in the airbag module housing portion; and
a positioning mechanism (24a, 27a, 43, 44) for positioning the airbag cover and the seat pan to each other in the mounted condition of the airbag cover.

## Patentansprüche

1. Kraftfahrzeugsitz, der in einem Kraftfahrzeug eingebaut ist, mit:
einem linken Seitenrahmen (12a) in einem eine Skelettstruktur eines Sitzes bildenden Sitzrahmen (10), der sich in Richtung von vorn nach hinten an einer linken Seite unter einem Sitzpolster erstreckt;
einem rechten Seitenrahmen (12b) im Sitzrahmen, der sich in Richtung von vorn nach hinten an einer rechten Seite unter dem Sitzpolster erstreckt;
einem Halter (13) zum Verbinden des linken Seitenrahmens und des rechten Seitenrahmens unter dem Sitzpolster;
einer Sitzwanne (20), die zwischen dem linken Seitenrahmen und dem rechten Seitenrahmen unter dem Sitzpolster über oder an der Rückseite des Halters so angeordnet ist, daß sie benachbart dazu ist, wobei die Sitzwanne einen Airbagmodul-Gehäuseabschnitt (21) aufweist, in dem eine Gehäuseöffnung an einer zum Halter entgegengesetzten Seite gebildet ist;
einem Airbagmodul (30), das einen Airbag (31) und einen Gasgenerator (32) aufweist und im Airbagmodul-Gehäuseabschnitt untergebracht sowie so eingerichtet ist, daß der Airbag von einer Unterseite zu einer Oberseite eines Sitzpolsters entfaltet und expandiert wird, indem Gas zum Expandieren des Airbags zugeführt wird, das durch Aktivierung des Gasgenerators gegen Vorwärtsbewegung eines Kraftfahrzeuginsassen in einem sitzenden Zustand auf einem Kraftfahrzeugsitz zu einer Vorderseite eines Kraftfahrzeugs bei einem Unfall erzeugt wird;
einer Airbagabdeckung (40), die auf der Sitzwanne eingebaut ist, um die an einer entgegengesetzten Seite zum Halter gebildete Gehäuseöffnung zu versperren, und eine Gehäuseöffnungsseite des Airbags abdeckt, der im Airbagmodul-Gehäuseabschnitt im Einbauzustand untergebracht ist; und
einem Positioniermechanismus (24a, 27a, 43, 44) zum gegenseitigen Positionieren der Airbagabdeckung und der Sitzwanne im Einbauzustand der Airbagabdeckung.

2. Kraftfahrzeugsitz nach Anspruch 1, wobei der Positioniermechanismus einen in der Sitzwanne vorgesehenen konkaven Abschnitt (24a, 27a) und einen konvexen Abschnitt (43, 44) aufweist, der in der Airbagabdeckung vorgesehen ist und mit dem konkaven Abschnitt in Eingriff gebracht werden kann.

3. Kraftfahrzeugsitz nach Anspruch 1 oder 2, ferner mit einem Fixierteil zum Befestigen und Fixieren der Airbagabdeckung und der Sitzwanne, die mit Hilfe des Positioniermechanismus im Einbauzustand der Airbagabdeckung gegenseitig positioniert sind.

4. Kraftfahrzeug mit:
dem Kraftfahrzeugsitz (100) nach einem der Ansprüche 1 bis 3; und
einem Sicherheitsgurt zum Rückhalten eines auf dem Kraftfahrzeugsitz sitzenden Kraftfahrzeuginsassen,
wobei das im Kraftfahrzeugsitz eingebaute Airbagmodul so aufgebaut ist, daß es eine Bewegung des Kraftfahrzeuginsassen zum Durchrutschen unter dem Sicherheitsgurt entlang einer Sitzfläche zusammen mit einer Vorwärtsbewegung eines Taillenabschnitts des Kraftfahrzeuginsassen bei Unfällen in einem Anlegezustand des Sicherheitsgurts blockiert, wobei der Sicherheitsgurt von dem auf dem Kraftfahrzeugsitz sitzenden Kraftfahrzeuginsassen angelegt ist.

5. Airbagmodul zur Verwendung in einem Kraftfahrzeugsitz,
wobei der Kraftfahrzeugsitz aufweist:
einen linken Seitenrahmen (12a) in einem eine Skelettstruktur eines Sitzes bildenden Sitzrahmen, der sich in Richtung von vorn nach hinten an einer linken Seite unter einem Sitzpolster erstreckt;
einen rechten Seitenrahmen (12b) im Sitzrahmen, der sich in Richtung von vorn nach hinten an einer rechten Seite unter dem Sitzpolster erstreckt;
einen Halter (13) zum Verbinden des linken Seitenrahmens und des rechten Seitenrahmens unter dem Sitzpolster; und
eine Sitzwanne (20), die zwischen dem linken Seitenrahmen und dem rechten Seitenrahmen unter dem Sitzpolster über oder an der Rückseite des Halters so angeordnet ist, daß sie benachbart dazu ist, und wobei die Sitzwanne einen Airbagmodul-Gehäuseabschnitt (21) aufweist, in dem eine Gehäuseöffnung an einer zum Halter entgegengesetzten Seite gebildet ist,
wobei das Airbagmodul einen Airbag (31) und einen Gasgenerator (32) aufweist und im Airbagmodul-Gehäuseabschnitt untergebracht ist und wobei das Airbagmodul so eingerichtet ist, daß der Airbag von einer Unterseite zu einer Oberseite eines Sitzpolsters entfaltet und expandiert wird, indem Gas zum Expandieren des Airbags zugeführt wird, das durch Aktivierung des Gasgenerators gegen Vorwärtsbewegung eines Kraftfahrzeuginsassen in einem sitzenden Zustand auf dem Kraftfahrzeugsitz zu einer Vorderseite eines Kraftfahrzeugs bei einem Unfall erzeugt wird, und
wobei das Airbagmodul ferner aufweist:
eine Airbagabdeckung (40), die auf der Sitzwanne eingebaut ist, um die an einer entgegengesetzten Seite zum Halter gebildete Gehäuseöffnung zu versperren, und eine Gehäuseöffnungsseite des Airbags in einem Zustand abdeckt, in dem er im Airbagmodul-Gehäuseabschnitt untergebracht ist; und
einen Positioniermechanismus (24a, 27a, 43, 44) zum gegenseitigen Positionieren der Airbagabdeckung und der Sitzwanne im Einbauzustand der Airbagabdeckung.

## Revendications

1. Un siège de véhicule à moteur monté sur un véhicule à moteur, comprenant :
un châssis côté gauche (12a) dans un châssis (10) de siège formant une structure d'un siège s'étendant dans une direction avant-arrière sur un côté gauche d'un coussin de siège ;
un châssis côté droit (12b) dans le châssis de siège s'étendant dans une direction avant-arrière sur un côté doit du coussin de siège ;
un support (13) destiné à relier le châssis côté gauche et le châssis côté droit au-dessous du coussin de siège ;
un baquet de siège (20) agencé entre le châssis côté gauche et le châssis côté droit sous le coussin de siège, au-dessus ou à l'arrière du support, de façon à être situé au voisinage de celui-ci, le baquet de siège comprenant une partie de boîtier de module d'airbag (21) dans laquelle une ouverture de boîtier est formée sur un côté opposé à celui du support ;
un module d'airbag (30) comprenant un airbag (31) et un générateur de gaz (32), renfermé dans la partie de boîtier de module d'airbag, et conçu de telle façon que l'airbag se développe et se gonfle depuis le bas vers le haut d'un coussin de siège par la fourniture d'un gaz destiné à gonfler l'airbag déclenchée par activation du générateur de gaz, à l'encontre d'un mouvement vers l'avant d'un passager du véhicule à moteur étant assis dans un véhicule à moteur en direction de l'avant d'un véhicule à moteur lorsqu'un accident se produit ;
un couvercle d'airbag (40) monté sur le baquet de siège de façon à intercepter l'ouverture de boîtier formée sur un côté opposé au support, et à recouvrir un côté d'ouverture de boîtier de l'airbag renfermé dans la partie de boîtier de module d'airbag lorsqu'il est monté ; et
un mécanisme de positionnement (24a, 27a, 43, 44) destiné à positionner le couvercle d'airbag et le baquet de siège l'un par rapport à l'autre lorsque le couvercle d'airbag est monté.

2. Le siège de véhicule à moteur selon la revendication 1, le mécanisme de positionnement comprenant une partie concave (24a, 27a) prévue dans le baquet de siège, et une partie convexe (43, 44) prévue dans le couvercle d'airbag et pouvant venir au contact de la partie concave.

3. Le siège de véhicule à moteur selon la revendication 1 ou la revendication 2, comprenant en outre un élément de fixation destiné à fixer et à sécuriser le couvercle d'airbag et le baquet de siège positionnés l'un par rapport à l'autre au moyen du mécanisme de positionnement lorsque le couvercle d'airbag est monté.

4. Un véhicule à moteur, comprenant :
le siège de véhicule à moteur (100) selon l'une quelconque des revendications 1 à 3 ; et
une ceinture de sécurité destinée à retenir un passager du véhicule à moteur assis dans le siège de véhicule à moteur,
le module d'airbag monté sur le siège de véhicule à moteur étant conçu de façon à bloquer un mouvement du passager du véhicule à moteur consistant à glisser sous la ceinture de sécurité le long d'une surface de siège, ainsi qu'un mouvement vers l'avant d'une partie de taille du passager du véhicule à moteur, lorsqu'un accident se produit, dans un état attaché de la ceinture de sécurité dans lequel la ceinture est portée par le passager du véhicule à moteur assis dans le siège de véhicule à moteur.

5. Un module d'airbag destiné à être utilisé dans un siège de véhicule à moteur, le siège de véhicule à moteur comprenant :
un châssis côté gauche (12a) dans un châssis de siège formant une structure d'un siège s'étendant dans une direction avant-arrière sur un côté gauche d'un coussin de siège ;
un châssis côté droit (12b) dans le châssis de siège s'étendant dans une direction avant-arrière sur un côté doit du coussin de siège ;
un support (13) destiné à relier le châssis côté gauche et le châssis côté droit sous le coussin de siège ; et
un baquet de siège (20) agencé entre le châssis côté gauche et le châssis côté droit sous le coussin de siège, au-dessus ou à l'arrière du support, de façon à être situé au voisinage de celui-ci, le baquet de siège comprenant une partie de boîtier de module d'airbag (21) dans laquelle une ouverture de boîtier est formée d'un côté opposé à celui du support ;
le module d'airbag comprenant un airbag (31) et un générateur de gaz (32), et étant renfermé dans la partie de boîtier de module d'airbag, et le module d'airbag étant conçu de telle façon que l'airbag se développe et se gonfle depuis le bas vers le haut d'un coussin de siège par la fourniture d'un gaz destiné à gonfler l'airbag déclenchée par l'activation du générateur de gaz, à l'encontre d'un mouvement vers l'avant d'un passager du véhicule à moteur étant assis dans un siège de véhicule à moteur en direction de l'avant d'un véhicule à moteur lorsqu'un accident se produit, et
le module d'airbag comprenant en outre :
un couvercle d'airbag (40) monté sur le baquet de siège de façon à intercepter l'ouverture de boîtier formée sur un côté opposé au support, et à recouvrir un côté d'ouverture de boîtier de l'airbag lorsqu'il est renfermé dans la partie de boîtier de module d'airbag ; et
un mécanisme de positionnement (24a, 27a, 43, 44) destiné à positionner le couvercle d'airbag et le baquet de siège l'un par rapport à l'autre lorsque le couvercle d'airbag est monté.
